# EUROPEAN PATENT SPECIFICATION

(11) **EP 3 132 679 B1**
(45) Date of publication and mention of the grant of the patent: **20.09.2017**
(21) Application number: 14732251.5
(22) Date of filing: 16.04.2014
(51) Int. Cl.: A01K 13/00

(54) **PROTECTOR FOR ANIMAL HOOVES**
HUFSCHUTZ FÜR TIERE
DISPOSITIF DE PROTECTION POUR SABOTS D'ANIMAUX

(43) Date of publication of application: 22.02.2017
(73) Proprietor: Shoe Floting, S.L., 33529 Nava - Asturias (ES)
(72) Inventor: GONZÁLEZ GARCÍA, Otilio, E-33529 Nava - Asturias (ES); PEREIRA SUÁREZ, Florentino, E-33529 Nava - Asturias (ES)
(74) Representative: Carvajal y Urquijo, Isabel
(86) International application number: PCT/ES2014/070325
(87) International publication number: WO 2015/158935

(56) References cited:
- WO-A1-03/015509
- WO-A2-2009/142801
- ES-U- 1 072 993

## Description

### Technical field

The present invention relates to protector for animal hooves especially designed for its application on horse hooves as a means of protection thereof and capable of adapting to any situation without interfering with the natural biomechanics of the animal.

### Background art

The traditional means of protection for horse hooves consist of the classical shoes affixed by means of nails to the hoof.

These means of protection present a series of inconveniences, such as being a fully rigid protection element preventing the potential deformations or adaptations of the hoof to the situations that could take place when the animal moves.

On the other hand, traditional shoes only provide partial protection to the hoof, specifically against the wear of the inner surface thereof. However, the fail to protect the lateral surface of the hoof or serve as means to protect the foot.

Protectors configured as a cover for the hoof are also known (See e.g. WO 03/015509 A1). In that sense we can cite WO2009142801 and Spanish Model Es 1072993U, which describe a protector in the form of a cover composed of a lower sole that can be coupled to the base of the hoof and by an upper wall that can be attached to the lateral surface of said hoof. The structure of these protectors is excessively rigid and prevents the adaptation thereof to the different shapes that can be adopted by the foot of the animal while it moves. On the other hand, these protectors are affixed to the lateral surface of the hoof by means of adhesive, which prevents the frequent dismounting thereof in a simple and quick manner.

PCT/US2006/034653 can also be cited as background art, which corresponds to a clear example of a static securing system, where no matter how much said system is tightened, there will always be movement between the protection and the foot of the horse in the support and takeoff phase, making the animal insecure.

A protector with the denomination "CAVALO BOOTS" is known in the market and presents the same problem indicated above, in addition to causing an absolute interference with the movement of the foot of the animal, producing significant friction therein.

Due to their conditions of indivisibility, all existing protectors, such as the ones cited above, fail to allow any adaptation to the foot of the animals in addition to the tightening thereof or the selection of the size.

### Summary of the invention

The object of the present invention is to solve the problems exposed above by means of a protector providing an appropriate protection to the entirety of the hoof of the animals and also to coronet thereof.

Another object of the invention is to provide a protector for animal hooves that is adaptable to any hoof asymmetry or shape by means of the application of heat, and which maintains the shapes obtained in this manner to provide the protection being sought.

One more object of the invention is to ensure a compact, flexible and stable attachment among the different components of the protector, such that they provide a feeling of security to the animal during the takeoff and landing of the coronet.

The object of the invention is to provide a protector for horse hooves with a simple and fast mounting and dismounting process.

The protector of the invention is described in claim 1. In one embodiment, the protector is of the type composed of a lower cover designed to serve as means of protection of the hoof of the legs of the animal, for which it is composed of a lower sole, with the same contour as the base of the hoof, and by a wall surrounding the sole along the length of its anterior and lateral edges, presenting a curvature, inclination and height matching those of the lateral surface of the hoof, all of the foregoing in such a way that this lower cover can be tightly coupled to the hoof. In order to achieve the foregoing, the lower cover is also constituted from a thermoplastic material, in order to achieve, by means of the application of heat, its perfect adaptation to the geometry of the hoof on which it will be placed.

The lower cover will also have a different geometry depending on whether it is intended for the front or hind legs of the animal.

According to the invention, the protector also includes a flexible heel with a laminar structure, made of rubber, and a frontal plate serving as a connection element between the lower cover and the heel, constituted from a thermoplastic material.

The heel comprises a posterior zone, formed to be adapted on the posterior surface of the coronet, and an anterior extension with a contour that approximately matches the inner contour of the sole of the lower cover. The posterior zone is intended to cover the posterior surface of the coronet, while the anterior extension is attached to the inner surface of the sole of the lower cover, to which it is affixed by means of an adhesive, forming an inseparable set. The heel will be constituted from a flexible material and with a certain elastic deformation capacity, made from rubber, such that the posterior zone is easily adaptable to the posterior surface of the coronet, while the anterior extension is perfectly fitted in the sole in the form of an insole and provides comfort and stimulus to each footing. The posterior zone has two openings sized and positioned to house the bulbs or fleshy parts of the coronet.

In terms of the frontal plate, it is designed as the closing means of the protector, carrying out the connection between the lower cover and the heel in front of the foot.

The protector of the invention is completed with an intermediate buffer piece, with a laminar structure and a flexible and padded nature, for example made from neoprene, this buffer piece being intended to be arranged around the foot of the animal in the form of a sock, above the hoof and under the heel and the frontal piece.

In order for the protector to provide a secure footing for the animal, the sole of the lower cover exteriorly presents a topography defined by ribs, grooves and a central recess with a triangular contour. One of the sides of this recess is located as to match the free edge of the sole and the vertex opposite said side is directed towards the center of the sole. The bottom of this triangular recess is provided with through-openings. The reduction in thickness of the sole in the zone of the triangular recess and the openings thereof provide the protector with sufficient flexibility to accompany the natural deformities taking place in the hoof capsule of the animal during the different phases of the movement.

The frontal plate also presents a thinner triangular zone with through-openings that allows a perfect adaptation to the set of the foot of the animal.

The different components described above constitute independent pieces that are affixed to one another to form the protector. To achieve the foregoing, the lower cover, the heel and the frontal plate have mutual connection means arranged in the attachable zones of said components.

The aforementioned attachable zones are constituted by the anterior extension of the heel, which is attached and affixed by means of adhesive to the inner surface of the sole of the lower cover, and by four lugs protruding from the sides of the posterior zone of the heel, two upper lugs, attached to the frontal piece and having holes for the affixing thereof to joint pivots of said frontal piece, and two lower lugs exteriorly attached to the wall of the lower cover, to which they are affixed by means of screws or pivots.

The intermediate buffer piece is affixed to the heel by means of an intermediate point attachment.

### Brief description of the drawings

The attached drawings show a non-limitative example of an embodiment of a protector for animal hooves constituted according to the invention:
- Figure 1 being an anterior perspective of the protector mounted on the coronet of an animal.
- Figure 2 being a posterior perspective of the same protector.
- Figure 3 being an upper perspective of the lower cover.
- Figure 4 being a lower perspective of the same cover.
- Figure 5 showing the heel in an ongoing manner.
- Figure 6 being a perspective of the frontal connection piece.
- Figure 7 showing the intermediate buffer piece in an ongoing manner.
- Figure 8 showing the protector of the invention during the mounting on the hoof of an animal in perspective.

### Detailed summary of an embodiment

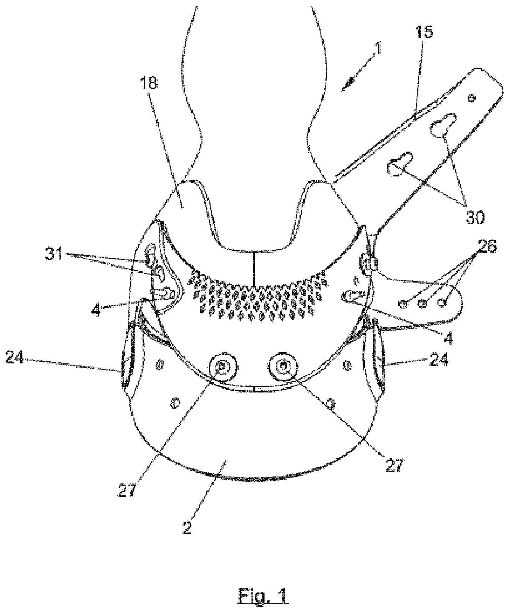

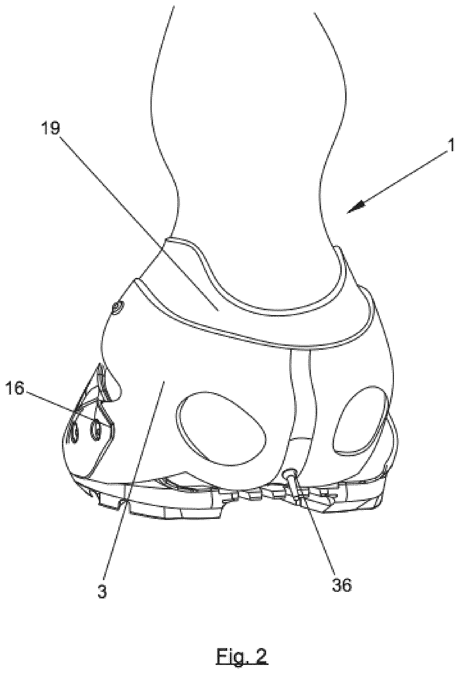

Figures 1 and 2 show the protector of the invention mounted on the foot (1) of an animal. This protector is composed of a lower cover (2), coupled to the base and lateral surface of the hoof of the animal, by a heel (3) coupled to the posterior surface of the foot and by a frontal connection plate between the lower cover (2) and the heel (3).

The lower cover (2) and the frontal plate (84) will be preferably constituted from a thermoformable material, for example a plastic material, while the heel (3) will be constituted from a material with a certain plastic deformation capacity, for example rubber.

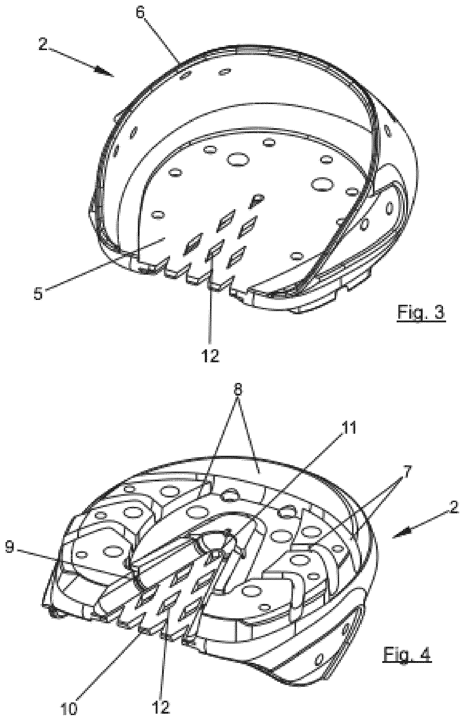

The lower cover (2), as better shown in figures 3 and 4, is composed of a sole (5), with the same contour than the base of the hoof of the animal, and by a wall (6) surrounding the sole (5) around its anterior and lateral curved edges. This wall (6) will present a curvature, inclination and height matching those of the lateral surface of the hoof of the animal. As shown in figure 4, the sole (6) of the lower cover (2) exteriorly presents a topography defined by grooves (7) and ribs (8) and a central recess (9) with a triangular contour, one of which sides (10) matches the free edge of the sole (5), the vertex (11) opposite said side (10) being directed towards the center of said sole. The bottom of the recessed triangular zone (9) is provided with through-openings (12).

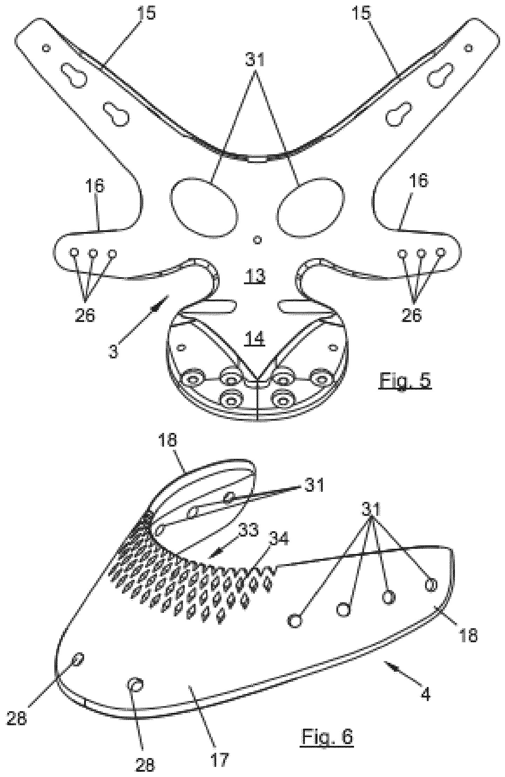

The heel (3) is shown in an ongoing manner in figure 5 and is constituted by a piece with a laminar structure, made of rubber, comprising a posterior zone (13) and an anterior extension (14). The posterior zone (13) is dimensioned and configured to adapt to the posterior surface of the coronet of the animal, while the anterior extension (14) presents a contour approximately matching the contour of the inner surface of the sole (5) to be attached to said inner surface and to be affixed to the same by means of an adhesive, such that the lower cover (2) and the heel (3) form an inseparable set.

As shown in figure 5, 4 lugs protrude from the posterior zone (13) of the heel, 2 upper lugs (15), approximately symmetrical to each other with respect to the longitudinal axis of the heel, and 2 lower lugs (16), also approximately symmetrical to each other.

Figure 6 shows the frontal connection plate (4), which, just like the lower cover (2), is constituted from a thermoformable material and with an approximately triangular configuration, to be adapted to the frontal part of the foot forming an anterior tab (17) that is partially superimposable on the wall (6) of the lower cover and two symmetrical posterior extensions (18) laterally attached to the foot of the animal.

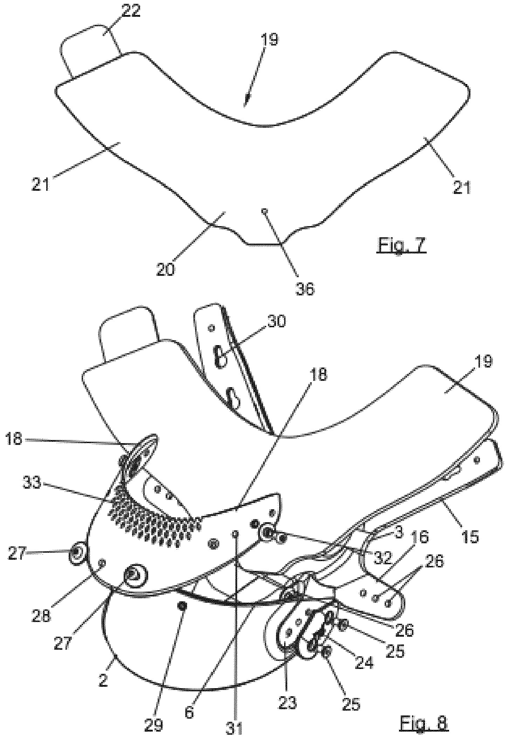

The protector of the invention is completed with an intermediate buffer piece (19), figures 1 and 2, constituted by a flexible and padded laminar piece located around the coronet of the animal, above the hoof and under the heel (3) and the frontal piece (4). Figure 7 shows this intermediate buffer piece (19) in an ongoing manner, which has a frontal zone (20) which will be located under the posterior zone (13) of the heel (3), to which it is connected by means of a point attachment (36) and lateral extensions (21) surrounding the foot under the heel (3), attached to each other by means of tabs (22) with "Velcro", for example.

As provided above, the lower cover (2), the heel (3) and the frontal plate (4) have mutual connection means, which consist of superimposable zones affixed to each other by means of adhesive and/or mechanical attachment means.

The attachment between the heel (3) and the lower cover (2) is carried out by means of the anterior extension (14) attached to the inner surface of the sole of the lower cover (2), to which it is connected by means of adhesive, and by means of the lower lugs (16) which, as shown in figures 1, 2 and 8, are attached to the sides of the wall (6) of the lower cover, in the zones (23) with the contour matching the contour of said lugs and on which a reinforcement piece (24) is then arranged, which is crossed by attachment screws (25) together with the lugs (16). The affixing of said lower lugs (16) is carried out through holes (26) that can be selected, though which the screws (25) that can be threaded in inner nuts (26) pass.

The attachment between the frontal plate (4) and the lower cover (2) is carried out through the anterior tab (17) of the frontal plate, figure 4, which is attached to the wall (6) of the lower cover (2), to which it is affixed by means of screws (27) that can be introduced through holes (28 and 29) matching the frontal plate (4) and the lower cover (2).

The superimposable zones between the heel (3) and the frontal plate (84) are constituted by the lugs (15) of the heel that can be attached to the posterior extensions (18) of the frontal connection plate (4), which are both provided with holes (30 and 31) that can be selected for the introduction of connection pivots (32), the affixing position being selected by combining together the holes (30 and 31) facing each other.

As shown in figures 6 and 8, the frontal connection plate (4) also has, between the extensions (18), a central zone (33) with small through-openings (34). With the purpose of providing the maximum comfort to the animals, the buffer piece (19) of figure 7 is arranged around the foot, above the hoof and under the heel (3) and frontal plate (4), as shown in figures 2, 3 and 8.

As shown in figures 2 and 5, the posterior zone of the heel (3) has two openings (31) that are dimensioned and positioned to house the bulbs or fleshy parts of the foot of the animal.

In order to carry out the mounting of the protector in the foot of a horse, the posterior zone (13) of the heel (3) is folded backwards and the lower cover (2) is then coupled to the hoof and the frontal plate is affixed to the wall (6) of the lower cover. Next, the buffer piece (19) is adjusted around the foot (1) as if it were a sock. The posterior part (13) of the heel (3) is then coupled to the foot (1), adjusting the openings (35) on the fleshy parts. Finally, the lugs (15 and 16) are attached to the anterior connection plate (4) and to the lower cover, said lugs being affixed to the aforementioned zones by means of pivots and/or screws (27 and 25), respectively.

The affixing of the upper lugs (15) to the frontal connection plate (4) by means of the pivots (32) can be adjusted by selecting the holes (30 and 31) through which the pivot (32) will be introduced. The affixing position of the lugs (16) on the zones (23) of the lower cover can also be adjusted in the same manner.

The attachment of the lugs with the zones on which they are attached can be secured by means of adhesive.

The protector of the invention allows adaptability to any asymmetry, shape or situation by means of heat: due to the arrangement of the other fastening components, the sole of the lower cover (2) can be heated to achieve the adaption thereof the exact shape of the foot.

The protector of the invention provides a natural movement of the foot without any interference due to its geometry and the existence of the triangular central zone (9) in the sole (5) of the lower cover and the zone (33) with through-opening in the frontal plate (4), all of which contributes to the boot forming part of the foot without interfering with the correct movement thereof.

With the protector of the invention a stable, compact and flexible fastening is also achieved, thanks to the interposition of the anterior extension (14), figure 5, of the heel between the hoof of the animal and the sole (5) of the lower cover.

Lastly, the simplicity and speed of the necessary operations to mount and dismount the protector should also be pointed out as an advantage.

It should be noted that the protector can only be used with the lower cover, which is affixed by means of adhesive to the lateral surface of the hoof.

## Claims

1. Protector for animal hooves, especially for horse hooves, composed of a lower cover that can be coupled to the base of the foot of the animal and of an upper wall that can be attached to the lateral surface of the hoof, to which it is affixed by means of adhesive, **characterized in that** it also comprises a heel (3) with a laminar structure, made from rubber, and a frontal connection plate (4) between the lower cover (2) and the heel (3), made from a thermoplastic material; which heel comprises a posterior zone (13) formed to adapt to the posterior zone of the foot (1), an anterior extension (14) with a contour approximately matching the contour of the inner surface of the sole (5) of the lower cover, which is attached and affixed by means of adhesive to said inner surface, and a series of lateral lugs (15-16) protruding from the posterior zone; and which frontal piece (4) has an approximately triangular contour, formed by an anterior tab (17) attached and affixed to the wall (6) of the lower cover and two symmetrical posterior extensions (18) attached to the sides of the hoof; the wall of the lower cover, the two posterior extensions of the frontal piece and the lateral lugs of the heel having mutual affixing means.

2. Protector according to the first claim, **characterized in that** the wall (6) of the lower cover surrounds the sole (5) along the length of its anterior and lateral curved edges and is interrupted along the length of the posterior edge of said sole.

3. Protector according to claim 1, **characterized in that** the sole (5) of the lower cover (2) exteriorly presents a topography defined by grooves (7) and ribs (8) and a central recess (9) with a triangular contour, one of which sides (10) matches the free edge of the sole (5), the vertex (11) opposite said side (10) being directed towards the center of said sole.

4. Protector according to claim 3, **characterized in that** the bottom of the triangular recess (9) is provided with through-openings (12).

5. Protector according to claim 1, **characterized in that** the posterior zone (13) of the heel presents two openings (31) that are dimensioned and positioned to house the bulbs or fleshy parts of the coronet.

6. Protector according to claim 1, **characterized in that** from the posterior zone (13) of the heel (3) 4 lugs protrude, 2 upper lugs (15) that can be attached and affixed to the frontal piece (4) by means of pivots (27) anchored in said frontal piece, and 2 lower lugs (16) attached to the sides of the lower cover, to which they are affixed by means of screws (25).

7. Protector according to claim 6, **characterized in that** the lugs (15-16) of the posterior piece of the heel are provided along the length thereof with holes that can be selected for the passage of the affixing pivots or screws.

8. Protector according to claim 1, **characterized in that** the frontal plate presents, between the two symmetrical posterior extensions (18), an intermediate zone (33) provided with through-openings (34).

9. Protector according to claim 1, **characterized in that** it also comprises an intermediate buffer piece interiorly attached to the heel by a point attachment (36) constituted by a flexible and padded sheet, which is arranged around the coronet (1) of the animal, above the hoof and under the heel (3) and the frontal piece (4).

## Patentansprüche

1. Schützer für Tierhufe, hauptsächlich für Pferdehufe, zusammengesetzt aus einer unteren Abdeckung, die an die Grundfläche des Fußes des Tieres gekoppelt werden kann, und einer oberen Wandung, die an der Seitenfläche des Hufes, an der es durch Haftmittel befestigt ist, angebracht werden kann, **dadurch gekennzeichnet, dass** er auch einen Absatz (3) mit einer laminaren Struktur, hergestellt aus Gummi, und eine stirnseitige Verbindungsplatte (4) zwischen der unteren Abdeckung (2) und dem Absatz (3), die aus einem thermoplastischen Material hergestellt ist, umfasst; wobei der Absatz einen hinteren Bereich (13), ausgebildet, um sich an den hinteren Bereich des Fußes (1) anzupassen, eine vordere Verlängerung (14) mit einer Kontur, die ungefähr mit der Kontur der inneren Oberfläche der Sohle (5) der unteren Abdeckung, die durch Haftmittel an der inneren Oberfläche angebracht und befestigt ist, zusammenpasst, und eine Reihe von seitlichen Nasen (15-16), die aus dem hinteren Bereich herausragen, umfasst; und wobei das stirnseitige Teil (4) eine ungefähr dreikantige Kontur hat, gebildet durch einen vorderen Lappen (17), der an der Wandung (6) der unteren Abdeckung angebracht und befestigt ist, und zwei symmetrische hintere Verlängerungen (18), die an den Seiten des Hufes angebracht sind; wobei die Wandung der unteren Abdeckung, die beiden hinteren Verlängerungen des stirnseitigen Teils und die seitlichen Nasen des Absatzes gegenseitige Befestigungsmittel aufweisen.

2. Schützer nach dem ersten Anspruch, **dadurch gekennzeichnet, dass** die Wandung (6) der unteren Abdeckung die Sohle (5) entlang der Länge ihrer vorderen und seitlichen abgerundeten Kanten umgibt und entlang der Länge der hinteren Kante der Sohle unterbrochen ist.

3. Schützer nach Anspruch 1, **dadurch gekennzeichnet, dass** die Sohle (5) der unteren Abdeckung (2) außen eine Topografie aufweist, die durch Rillen (7) und Rippen (8) und eine zentrale Aussparung (9) mit einer dreikantigen Kontur, wobei eine der Seiten (10) mit der freien Kante der Sohle (5) zusammenpasst, wobei der Scheitelpunkt (11) gegenüber der Seite (10) zur Mitte der Sohle hin ausgerichtet ist, definiert ist.

4. Schützer nach Anspruch 3, **dadurch gekennzeichnet, dass** der Boden der dreikantigen Aussparung (9) mit Durchgangsöffnungen (12) versehen ist.

5. Schützer nach Anspruch 1, **dadurch gekennzeichnet, dass** der hintere Bereich (13) des Absatzes zwei Öffnungen (31) aufweist, die abgemessen und positioniert sind, um die Birnen oder fleischigen Teile der Krone aufzunehmen.

6. Schützer nach Anspruch 1, **dadurch gekennzeichnet, dass** aus dem hinteren Bereich (13) des Absatzes (3) 4 Nasen herausragen, 2 obere Nasen (15), die an dem stirnseitigen Teil (4) mittels Drehzapfen (27), die in dem stirnseitigen Teil verankert sind, angebracht und befestigt werden können, und 2 untere Nasen (16), angebracht an den Seiten der unteren Abdeckung, an denen sie mittels Schrauben (25) befestigt sind.

7. Schützer nach Anspruch 6, **dadurch gekennzeichnet, dass** die Nasen (15-16) des hinteren Teils des Absatzes entlang der Länge davon mit Löchern versehen sind, die für den Durchgang der Befestigungszapfen oder Schrauben ausgewählt werden können.

8. Schützer nach Anspruch 1, **dadurch gekennzeichnet, dass** die stirnseitige Platte zwischen den beiden symmetrischen hinteren Verlängerungen (18) einen dazwischenliegenden Bereich (33), der mit Durchgangsöffnungen (34) versehen ist, aufweist.

9. Schützer nach Anspruch 1, **dadurch gekennzeichnet, dass** er auch ein dazwischenliegendes Pufferteil, angebracht innen am Absatz durch eine Punktbefestigung (36), gebildet durch eine flexible und gepolsterte Folie, die um die Krone (1) des Tieres angeordnet ist, oberhalb des Hufes und unter dem Absatz (3) und dem stirnseitigen Teil (4), umfasst.

## Revendications

1. Protecteur pour sabots d'animaux, en particulier pour sabots de chevaux, composés d'un couvercle inférieur qui peut être couplé à la base du pied de l'animal et d'une paroi supérieure qui peut être liée à la surface latérale du sabot, auquel il est fixé au moyen d'un adhésif, **caractérisé en ce qu'**il comprend également une talonnette (3) avec une structure laminaire, à base de caoutchouc, et une plaque de raccordement (4) frontale entre le couvercle inférieur (2) et la talonnette (3), à base de matière thermoplastique ; dont le talon comprend une zone postérieure (13) formée pour s'adapter à la zone postérieure du pied (1), une extension antérieure (14) avec un contour correspondant approximativement au contour de la surface interne de la semelle (5) du couvercle inférieur, qui est liée et fixée au moyen d'un adhésif à ladite surface interne, et un ensemble d'ergots latéraux (15-16) faisant saillie de la zone postérieure ; et dont la pièce frontale (4) a un contour approximativement triangulaire, formée par une languette antérieure (17) liée et fixée à la paroi (6) du couvercle inférieure et deux extensions postérieures symétriques (18) liées aux côtés du sabot ; la paroi du couvercle inférieur, les deux extensions postérieures de la pièce frontale et les ergots latéraux de la talonnette ayant des moyens de fixation mutuels.

2. Protecteur selon la première revendication, **caractérisé en ce que** la paroi (6) du couvercle inférieur entoure la semelle (5) sur toute la longueur de ses bords incurvés latéraux et antérieurs et est entrecoupée sur toute la longueur du bord postérieur de ladite semelle.

3. Protecteur selon la revendication 1, **caractérisé en ce que** la semelle (5) du couvercle inférieur (2) présente à l'extérieur une topographie définie par des rainures (7) et des nervures (8) et un renfoncement central (9) avec un contour triangulaire, dont l'un des côtés (10) correspond au bord libre de la semelle (5), le sommet (11) opposé audit côté (10) étant orienté vers le centre de ladite semelle.

4. Protecteur selon la revendication 3, **caractérisé en ce que** la partie inférieure du renfoncement triangulaire (9) est pourvue d'ouvertures traversantes (12).

5. Protecteur selon la revendication 1, **caractérisé en ce que** la zone postérieure (13) du talon présente deux ouvertures (31) qui sont configurées et positionnées pour loger les bulbes ou les parties charnues de la patte.

6. Protecteur selon la revendication 1, **caractérisé en ce que** depuis la zone postérieure (13) de la talonnette (3) 4 ergots font saillie, 2 ergots supérieurs (15) qui peuvent être liés et fixés à la pièce frontale (4) au moyen de pivots (27) ancrés dans ladite pièce frontale, et 2 ergots inférieurs (16) liés aux côtés du couvercle inférieur, auquel ils sont fixés au moyen de vis (25).

7. Protecteur selon la revendication 6, **caractérisé en ce que** les ergots (15-16) de la pièce postérieure de la talonnette sont pourvus sur toute la longueur de celle-ci d'orifices qui peuvent être choisis pour le passage des pivots ou vis de fixation.

8. Protecteur selon la revendication 1, **caractérisé en ce que** la plaque frontale présente, entre les deux extensions postérieures symétriques (18), une zone intermédiaire (33) pourvue d'ouvertures traversantes (34).

9. Protecteur selon la revendication 1, **caractérisé en ce qu'**il comprend également une pièce tampon intermédiaire liée à l'intérieur à la talonnette par un point de liaison (36) constitué d'une couche flexible et rembourrée, qui est disposée autour de la patte (1) de l'animal, au-dessus du sabot et sous la talonnette (3) et la pièce frontale (4).
